# EUROPEAN PATENT SPECIFICATION

(11) **EP 4 266 109 B1**
(45) Date of publication and mention of the grant of the patent: **04.12.2024**
(21) Application number: 22201108.2
(22) Date of filing: 12.10.2022
(51) Int. Cl.: G02B 23/04, G02B 23/10, G02B 23/18, G02B 7/02

(54) **BINOCULAR TELESCOPE WITH DIGITAL DISPLAY AND LASER RANGING FUNCTIONS**
BINOKULARES FERNROHR MIT DIGITALER ANZEIGE UND LASERENTFERNUNGSMESSUNGSFUNKTIONEN
TÉLESCOPE BINOCULAIRE AVEC FONCTIONS D'AFFICHAGE NUMÉRIQUE ET DE TÉLÉMÉTRIE LASER

(30) Priority: 16.08.2022 CN 202210978630
(43) Date of publication of application: 25.10.2023
(73) Proprietor: Kunming Shunho Optics Co., ltd., 650106 Kunming Yunnan (CN)
(72) Inventor: LIU, Zhongnan, Kunming, 650106 (CN); YANG, Ke, Kunming, 650106 (CN)
(74) Representative: Plavsa, Olga

(56) References cited:
- CN-A- 111 609 830
- US-A- 3 351 408
- US-A- 3 531 177
- US-A- 5 452 131
- US-A1- 2012 194 904
- US-B1- 10 288 735

## Description

### Technical Field

The present invention relates to the field of binocular telescopes, and in particular to a binocular telescope with digital display and laser ranging functions.

### Background Art

Binoculars, also known as a "binocular telescope", is a telescope composed of two monocular telescopes side by side, in which the distance between two eyepieces can be adjusted to facilitate observation by both eyes at the same time, thereby realising three-dimensionality, which is often used in navigation, military surveillance, field observation, and so on.

Eyepieces and objectives on inner sides of lens barrels at both ends of an existing binocular telescope are directly exposed to the outside, so water vapour may adhere to their surfaces. In addition, as the water vapour may cause dust to adhere to their surfaces, it is easy to cause dust particles to exist on lenses after a long time of use, and it is inconvenient to wipe, resulting in the lenses becoming more and more blurred, which seriously affects the service life of the telescope.

US 10288735B1 disclosed a binocular telescope with digital laser ranging function, comprising an objective component, a beam splitter and coincidence prism system and an ocular component.

US 3531177A disclosed an optical binocular in which optical components including image-erecting prisms or mirrors are mounted in a body of plastic foam material.

US 5452131 A disclosed a sighting device for small arms comprising a holder which at one end carries a light transmitting mirror and at its other end a first light emitter.

US 3351408A disclosed a sunlight-filtering ocular adapter for telescopes which comprises a planar green glass filter for filtering out harmful ultra-violet and infra-red rays.

US 2012/194904A1 disclosed binoculars provided with an image stabilizing function (image blur correcting function) to reduce image blur caused by hand jiggling or the like.

### Summary of the Invention

An object of the present invention is to provide a binocular telescope with digital display and laser ranging functions, so as to solve the above problems proposed in the background art.

In order to achieve the above object, the present invention provides the technical solution that is set out in the appended set of claims.

The technical effects and advantages of the present invention are as follows:
(1) In the present invention, the mounting groove and the limiting block are provided on an inner side of a side of an objective hole of the binocular telescope body, the glass sheet is provided on an outer side of the limiting block, an outer side of the glass sheet is connected with the limiting plate in a clamping manner, an outer side of the limiting plate is threadingly and fixedly connected to an inner side of the mounting groove with the thread, such that the glass sheet can be effectively clamped to the inner side of the objective hole of the binocular telescope body, and the two ends on the outer side of the limiting plate being both fixedly connected with the dial blocks can effectively help the limiting plate to rotate, thereby facilitating disassembly of the glass sheet, protecting an internal lens from water vapour and dust, improving the use safety of internal components of the binocular telescope body, and prolonging the service life.
(2) In the present invention, coating on the glass sheet can effectively improve the use strength of the glass sheet, reduce the adhesion of water vapour, make the binocular telescope body to keep clear all the time when in use, reduce the adhesion of dust, effectively increase the clarity of the glass sheet, and improve the use effect of the binocular telescope body.
(3) In the present invention, by combining the first right-angle prism, the isosceles prism and the second right-angle prism into the composite prism which is such a simplified optical system, the projection display assembly is simplified. It is possible to further provide a transmission-type display device 12 directly on a side of the first right-angle prism, where the transmission-type display device 12 may be an LCD or an OLED. In this way, a laser ranging binocular telescope is further formed, which can effectively perform ranging and reading, and the use effect is improved.

### Brief Description of the Drawings

FIG. 1 is a schematic front view of the structure of the present invention;
FIG. 2 is a schematic enlarged view of the structure of part A in FIG. 1;
FIG. 3 is a schematic structural view of a main body of a limiting plate in the present invention;
FIG. 4 is a schematic structural view in cross-section of the present invention;
FIG. 5 is an optical system view of the present invention having a composite prism;
FIG. 6 is a schematic structural view of a main body of a composite prism in the present invention;
FIG. 7 is an optical system view of the present invention having a composite prism with another structure;
FIG. 8 is a schematic structural view of a main body of a composite prism with another structure in the present invention; a;
FIG. 9 is a schematic structural view of a main body of a roof prism in the present invention.

In the figures: 1 - binocular telescope body; 101 - adjustment shaft; 102 - mounting groove; 103 - limiting block; 2 - glass sheet; 3 - limiting plate; 301 - dial block; 302 - thread; 4 - first lens; 5 - second lens; 6 - composite prism; 601 - first right-angle prism; 602 - isosceles prism; 603 - second right-angle prism; 604 - beam-splitting face A; 605 - reflection and transmission face; 606-third right-angle prism; 607 - beam-splitting face B; 7 - roof prism; 701 - roof prism reflection and transmission face; 702 - roof prism reflection face; 8 - third lens; 9 - fourth lens; 10 - fifth lens; 51 - sixth lens; 52 - seventh lens; 53 - eighth lens; 11 - incident ray; 12 - transmission-type display device; 13 - display; 14 - detector A; 15 - detector B; 16 - imaging lens A; 17 - plane mirror; 18 - imaging lens B; 19 - exit optical axis A; 20 - exit optical axis B; 21 - incident optical axis of display; 22 - emission device.

### Detailed Description of Embodiments

The technical solution in the embodiments of the present invention will be clearly and completely described below in conjunction with the accompanying drawings for the embodiments of the present

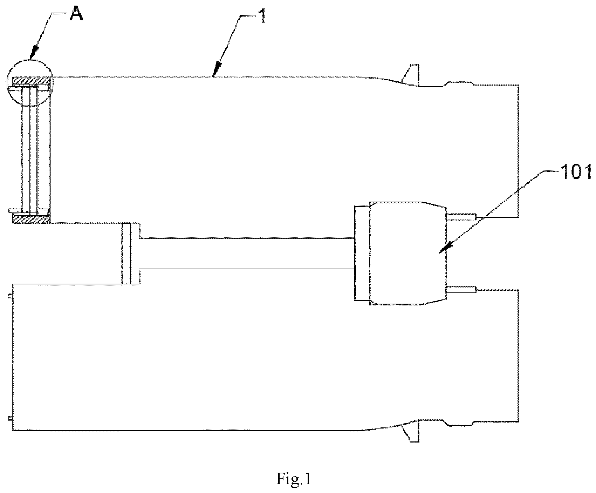

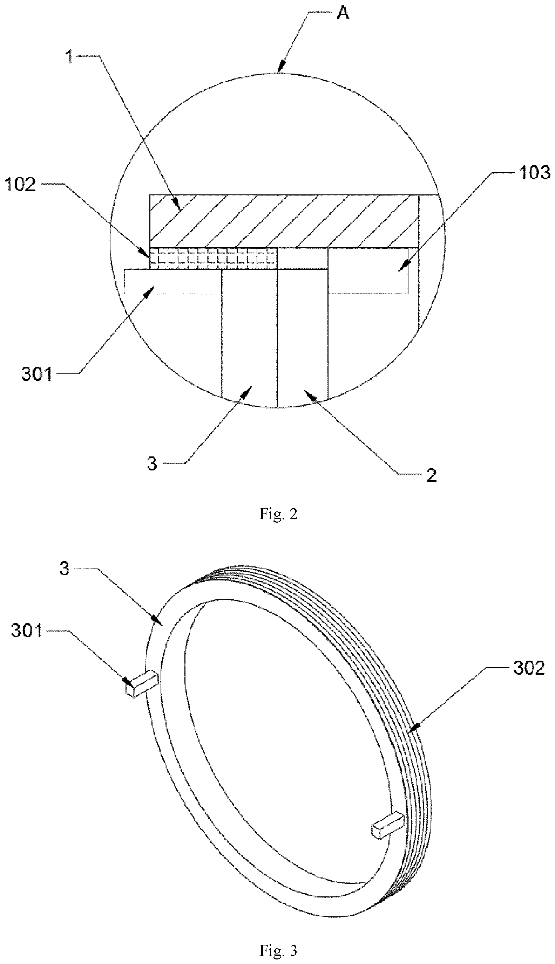

The present invention provides a binocular telescope with digital display and laser ranging functions as shown in FIG. 1 to FIG. 7. The binocular telescope includes:
a binocular telescope body 1, with an adjustment shaft 101 for adjusting an angle of the binocular telescope body 1 being provided in the middle of the binocular telescope body 1;
a glass sheet 2 for shielding and protecting internal components of the binocular telescope body 1; and
a limiting plate 3 for limiting and fixing the glass sheet 2.

A mounting groove 102 and a limiting block 103 are provided on an inner side of the binocular telescope body 1, the mounting groove 102 and the limiting block 103 are both fixedly connected to the inner side of the binocular telescope body 1, and the mounting groove 102 is provided on an outer side of the limiting block 103. The limiting block 103 is provided on the inner side of the binocular telescope body 1 to facilitate limiting of the glass sheet 2. The limiting block 103 is provided in a ring shape and is provided on an inner side of an objective barrel of the binocular telescope body 1. After the glass sheet 2 is placed in the objective barrel, the arrangement of the limiting block 103 can effectively limit the glass sheet 2 in a clamping manner. With the arrangement of the mounting groove 102 which is provided with a thread on its inner side, it is convenient to threadingly and fixedly connect the limiting plate 3 to the inner side of the mounting groove 102, so as to limit the glass sheet 2.

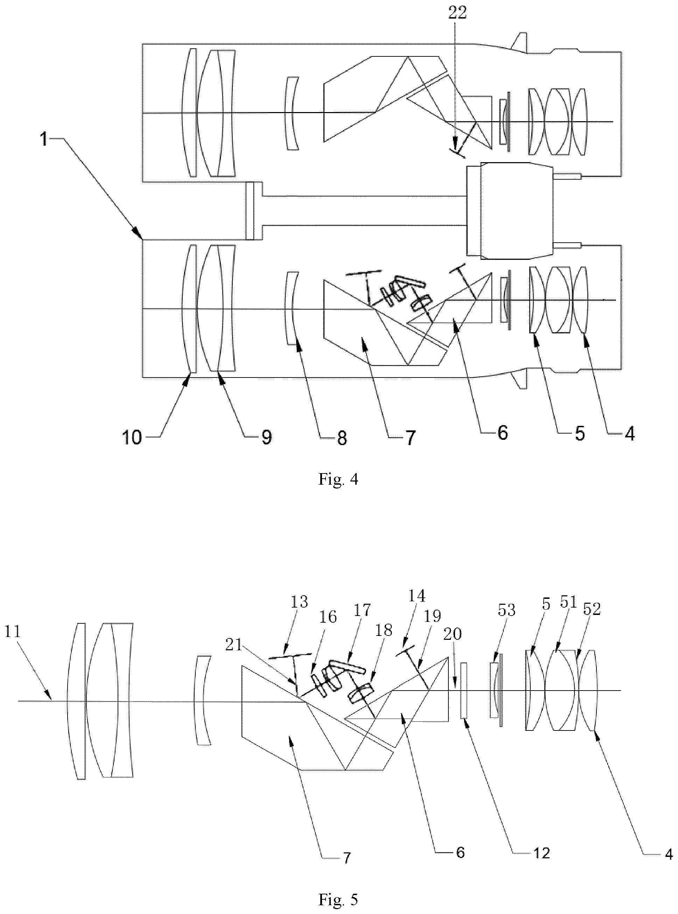

As shown in Figs 4~6 and 9, under the condition that a composite prism 6 is composed of an isosceles prism 602, a first right-angle prism 601 and a second right-angle prism 603. In the present invention, a visible ray imaged by an objective enters a roof prism 7 along an optical axis 11, is reflected by a roof prism reflection (internal reflection and external reflection) and transmission face 701, then is reflected by a roof prism reflection face 702, exits from the roof prism reflection (internal reflection and external reflection) and transmission face 701 of the roof prism 7, and enters a composite prism 6 composed of the first right-angle prism 601, the isosceles prism 602 and the third right-angle prism 603. The ray passes through a beam-splitting face B607, is reflected by a reflection and transmission face 605, and reaches another beam-splitting face A604. The ray in the visible light spectrum directly passes through the beam-splitting face A604, exits from the first right-angle prism 601, and reaches an observation focal plane along an exit optical axis 20. A laser ray reflected by a measured target for ranging is reflected off the beam-splitting face A604, exits from a reflection and transmission face 605 of the isosceles prism 602, and reaches a detector A14. Due to the reversibility of optical paths, in one of two optical paths of the laser ranging binocular telescope, an emission device 22 may be mounted in a position equivalent to that of the detector A14, so it is possible that the laser is emitted from this objective as a collimated beam. In this way, the group of prisms can transfer a visible light image from the objective to the eyepiece for observation by eyes, and at the same time the ranging can be implemented with a laser beam.

An outer side of the limiting plate 3 is provided with a thread 302, the thread 302 is provided in concert with the mounting groove 102, the limiting plate 3 is threadingly and fixedly connected to an inner side of the mounting groove 102 with the thread 302, and dial blocks 301 are symmetrically and fixedly connected to two ends on the outer side of the limiting plate 3. The inner side of the limiting plate 3 is hollowed out, and the outer side is used to limit the glass sheet 2, which will not affect viewing. With the arrangement of the thread 302, it is convenient to threadingly and fixedly connect the limiting plate 3 to the inner side of the mounting groove 102. With the dial blocks 301 being provided on the outer side of the limiting plate 3, it is convenient to pinch the dial blocks 301 on both sides so as to rotate the limiting plate 3.

An objective assembly, a beam-splitting and image-combining prism system and an eyepiece assembly are provided on the inner side of the binocular telescope body 1, the beam-splitting and image-combining prism system is provided between the objective assembly and the eyepiece assembly, and the beam-splitting and image-combining prism system includes a composite prism 6 and a roof prism 7. An object to be observed at a distance can be imaged through the objective assembly. A visible light image formed by the objective assembly and a red light image of a display 13 may be observed at the same time through the eyepiece assembly. The beam-splitting and image-combining prism system may transmit rays, so as to facilitate transmission of images obtained from the objective assembly to the eyepiece assembly for observation.

As shown in Figs 4~6 and 9, the composite prism 6 is composed of the first right-angle prism 601, the isosceles prism 602 and the second right-angle prism 603, where the first right-angle prism 601 and the second right-angle prism 603 have the same shape and symmetrically abut on two isosceles faces of the isosceles prism 602, respectively. Wherein the beam-splitting face A is formed by coating a beam splitting film on the hypotenuse faces of the first right-angle prism, and the beam-splitting face B is formed by coating a beam splitting film on the hypotenuse faces of the second right-angle prism.

An imaging lens B18 in parallel to an reflection and transmission face 605 is arranged at a distance from the reflection and transmission face 605 of the isosceles prism 602, and arrange a plane mirror 17 and an imaging lens A16 located on the plane mirror light axis; a display 13 is arranged above a roof prism reflection (internal reflection and external reflection) and transmission face 701, the image of the display 13 is reflected to the imaging lens A16 along the incident optical axis 21 of display through the roof prism reflection and transmission face 701, the image is projected and reflected on the beam-splitting face B607 after passing through the plane mirror 17 and then the imaging lens B18; a detector A14 is arranged in parallel above the reflection and transmission face 605 of the isosceles prism 2, the outside of the first right-angle prism 601 is provided with an observation focal plane, the detector A14 is imaged by an exit optical axis A19, the observation focal plane is imaged by an exit optical axis B20, and both of them are intersected on the beam-splitting face A604.

The requirements for the coating of the beam splitting surface A and the beam splitting surface B include the following: under the condition that a wavelength is 400~635±15nm, Tave≥98%, Tmin≥96%, T550≥99%; under the condition that the wavelength is 670~720±20nm, Tave≥90%, Tave is the average transmittance, Tmin is the minimum transmittance, T550 is the transmittance when the wavelength is 550nm; full-surface coating on the hypotenuse face of the first right-angle prism and the second right-angle prism. As a result, the blue spot in the center of the field of view can be effectively avoided, and the observation effect is effectively improved; the color reproduction is improved, and the color is no longer bluish; the wavelength of the beam splitting film is more matched with the wavelength of the LED display, and the parameter display during use is brighter and clearer; the transmittance has increased by 3%, the brightness of the observed scene has been improved, and the transmittance difference between the left and right barrels of the telescope, has become smaller, reducing visual fatigue during observation.

The objective assembly includes a third lens 8, a fourth lens 9 and a fifth lens 10. The third lens 8, the fourth lens 9 and the fifth lens 10 are all provided in a same axial direction. The eyepiece assembly includes a first lens 4 and a second lens 5. The first lens 4 and the second lens 5 are both provided in a same axial direction. A sixth lens 51 and seventh lens 52 are provided between the first lens 4 and the second lens 5, the sixth lens 51 and the seventh lens 52 are cemented together. An eighth lens 53 is provided between the second lens 5 and the composite prism 6. The eyepiece assembly has a total of five lenses, increased from the original three to five. The eighth lens 53 and the other four lenses are assembled on both sides of a diaphragm. The eighth lens 53 is fixed with glue. The other four lenses are fixed by a metal diaphragm and a spacer matched with an eyepiece barrel. The material of the entire eyepiece assembly is ZK9B and ZF52 high-refractive materials. For the entire eyepiece assembly, in terms of the imaging effect, the phase difference is reduced, the flat field is improved, the chromatic aberration is reduced, the degree of colour reproduction is increased, and the distortion is also reduced. The seventh lens not only plays a role of imaging in the entire eyepiece optical system, but also plays a role of a diaphragm in eliminating stray light, which improves the use effect.

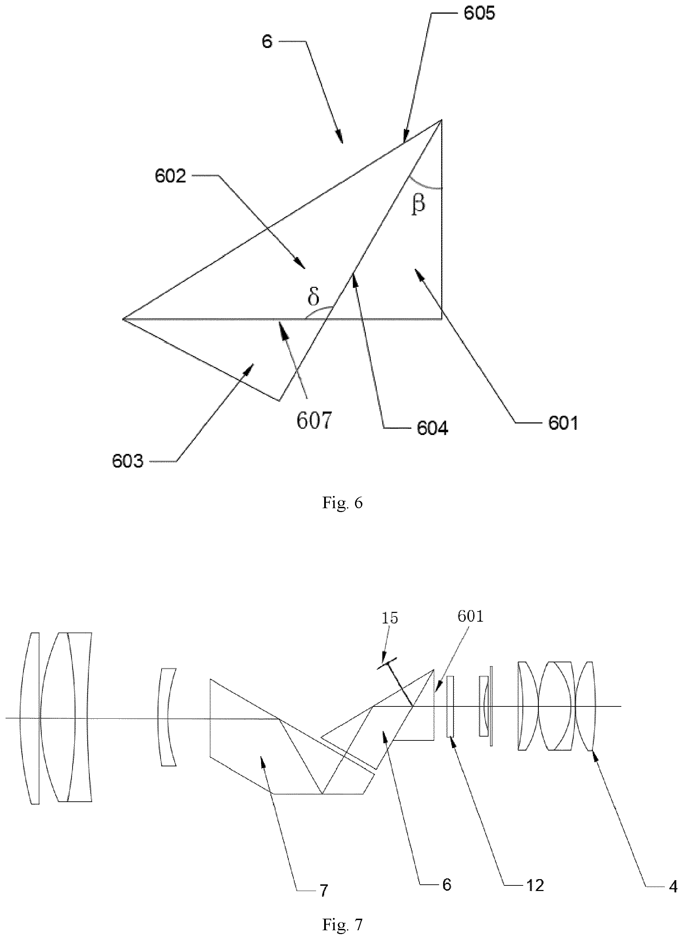

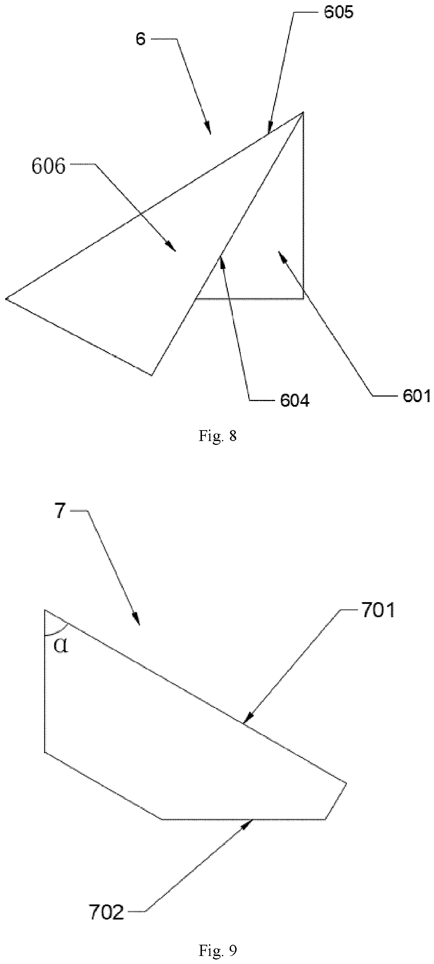

As shown in Figs 6 and 9, an angle α of the roof prism 7 is 55° to 64°, an angle β of the first right-angle prism 601 and that of the second right-angle prism 603 are 27° to 32°, and an angle δ of the isosceles prism 602 is 110° to 128°. The angle α of the roof prism 7 is preferably 60°, the angle β of the first right-angle prism 601 and that of the second right-angle prism 603 are preferably 30°, and the angle δ of the isosceles prism 602 is preferably 120°.

As shown in Figs 4, 7 and 8, the beam-splitting and image-combining prism system comprises a composite prism 6 and a roof prism 7, and the composite prism 6 is composed of a first right-angle prism 601 and a third right-angle prism 606, wherein , a right-angle face of the third right-angle prism 606 is longer than a hypotenuse face of the first right-angle prism 601, and the right-angle face of the third right-angle prism 606 abuts on the hypotenuse face of the first right-angle prism 601;
The composite prism 6 has only one beam-splitting face A604, a detector B15 is arranged in parallel on a reflection and transmission face 605 of the third right-angle prism 606, the observation focal plane on the outside of the first right-angle prism 601 is provided with a transmission-type display device 12, and the transmission-type display device 12 may be an LCD or an OLED. The transmission-type display device 12 may display the graphics and text information as: graphs, signs, symbols, or characters.

The reflection and transmission face 605 and the beam-splitting face A604 are provided on an inner side of the composite prism 6. A roof prism reflection (internal reflection and external reflection) and transmission face 701 and a roof prism reflection face 702 are provided on an inner side of the roof prism 7. An incident ray 11 is transmitted inside the binocular telescope body 1, and the incident ray 11 passes through the objective assembly from a side of an objective of the binocular telescope body 1, then passes through the beam-splitting and image-combining prism system, and finally passes through the eyepiece assembly to reach eyes, where a transmission direction in the beam-splitting and image-combining prism system is as follows: the incident ray 11 passes through the roof prism 7 and is transmitted to the roof prism reflection (internal reflection and external reflection) and transmission face 701, is reflected by the roof prism reflection (internal reflection and external reflection) and transmission face 701 onto the roof prism reflection face 702, then is reflected by the roof prism reflection face 702 to the first reflection and transmission face 605, and passes through the beam-splitting face A604 into the eyepiece assembly and thus into the eyes.

Wherein, the beam-splitting face A604 is formed by coating the entire hypotenuse face of the first right-angle prism 601 with a beam-splitting film. The requirements for the coating of the beam splitting surface A604 include the following: under the condition that a wavelength is 400~635±15nm, Tave≥98%, Tmin≥96%, T550≥99%,; under the condition that the wavelength is 670~720±20nm, Tave≥90%, Tave is the average transmittance, Tmin is the minimum transmittance, T550 is the transmittance when the wavelength is 550nm.

In the present invention, a visible ray imaged by the objective enters the roof prism 7 along the optical axis, is reflected by the roof prism reflection (internal reflection and external reflection) and transmission face 701 then is reflected by the roof prism reflection face 702, exits from the reflection (internal reflection and external reflection) and transmission face 701 of the roof prism 7, and enters the composite prism 6 composed of the first right-angle prism 601 and the third right-angle prism 606. The ray reaches a beam-splitting face A604. The ray in the visible light spectrum directly passes through the beam-splitting face A604, exits from the right-angle prism 601, and reaches, along an exit optical axis B20, an observation focal plane on which the transmission-type display device 12 is provided. A laser ray reflected by a measured target for ranging is reflected off the beam-splitting face A604, exits from the reflection and transmission face 605 of the third right-angle prism 606 and reaches a detector B15. Due to the reversibility of optical paths, in one of two optical paths of the laser ranging binocular telescope, an emission device 22 may be mounted in a position equivalent to that of the detector, so it is possible that the laser is emitted from this objective as a collimated beam. In this way, the group of prisms can transfer a visible light image from the objective to the eyepiece for observation by eyes, and at the same time the ranging can be implemented with a laser beam.

A lens coating method for a binocular telescope with digital display and laser ranging functions includes:
step 1: cleaning treatment: firstly cleaning the glass sheet 2, that is, soaking it in clean water for 5 to 10 minutes, taking it 2 out, and then rinsing it in a water pipe for 3 to 5 minutes;
step 2: drying treatment: performing drying after cleaning, that is, dehydrating the cleaned glass sheet 2 with isopropanol, drying the dehydrated substrate through slow pulling with isopropanol, and then placing it in a dust-free coating constant-temperature oven to bake it at 60°C to 75°C for 5 hours;
step 3: hardening treatment: immersing the glass sheet 2 in a methyl silicone resin strengthening solution, with a hardening treatment temperature of 115°C to 125°C; and after 2 hours, taking out the glass sheet 2 and sending it to a drying oven for drying and curing, with a drying temperature of 120°C, and a curing time of 60 minutes;
step 4: annealing treatment: performing annealing on the hardened glass sheet 2;
step 5: secondary cleaning: placing the annealed glass sheet 2 in a vacuum coating chamber, and performing ion bombardment on a lens substrate with a Hall ion source for 3 to 5 minutes; and
step 6: coating with waterproof film layers: keeping a vacuum degree in the vacuum coating chamber greater than or equal to 5.0×10⁻³ Pa, simultaneously keeping a temperature in the vacuum coating chamber at 50°C to 70°C, and bombarding beeswax with the Hall ion source, where after the beeswax is evaporated, it is deposited on outer surfaces on both sides of the glass sheet 2 in the form of nano-scale molecules, with thicknesses of 60 nm to 100 nm, and finally colourless waterproof film layers of beeswax are formed.

Finally, it should be noted that the above embodiments are merely preferred embodiments of the present invention but not intended to limit the present invention.

## Claims

1. A binocular telescope with digital display and laser ranging functions, comprising:
a binocular telescope body (1), with an adjustment shaft (101) for adjusting an angle of the binocular telescope body (1) being provided in the middle of the binocular telescope body (1);
a glass sheet (2) for shielding and protecting internal components of the binocular telescope body (1); and
a limiting plate (3) for limiting and fixing the glass sheet (2);
**characterized in that** a mounting groove (102) and a limiting block (103) are provided on an inner side of the binocular telescope body (1), the mounting groove (102) and the limiting block (103) are both fixedly connected to the inner side of the binocular telescope body (1), and the mounting groove (102) is provided on an outer side of the limiting block (103); and
an outer side of the limiting plate (3) is provided with a thread (302), the thread (302) is provided in concert with the mounting groove (102), the limiting plate (3) is threadingly and fixedly connected to an inner side of the mounting groove (102) with the thread (302), and dial blocks (301) are symmetrically and fixedly connected to two ends on the outer side of the limiting plate (3),
wherein the inner side of the limiting plate (3) is hollowed out.

2. The binocular telescope with digital display and laser ranging functions according to claim 1, **characterized in that** an objective assembly, a beam-splitting and image-combining prism system and an eyepiece assembly are provided on the inner side of the binocular telescope body (1), the beam-splitting and image-combining prism system is provided between the objective assembly and the eyepiece assembly, or the composite prism (6) is composed of a first right-angle prism (601) and a third right-angle prism (606); wherein a right-angle face of the third right-angle prism (606) is longer than a hypotenuse face of the first right-angle prism (601), and the right-angle face abuts on the hypotenuse face of the first right-angle prism (601).

3. The binocular telescope with digital display and laser ranging functions according to claim 2, **characterized in that** an objective assembly comprises a third lens (8), a fourth lens (9) and a fifth lens (10), wherein the third lens (8), the fourth lens (9) and the fifth lens (10) are all provided in a same axial direction, and an eyepiece assembly comprises a first lens (4) and a second lens (5), wherein the first lens (4) and the second lens (5) are both provided in a same axial direction, a sixth lens (51) and a seventh lens (52) are provided between the first lens (4) and the second lens (5), an eighth lens (53) is provided between the second lens (5) and the composite prism (6).

4. The binocular telescope with digital display and laser ranging functions according to claim 2, **characterized in that**, under the condition that the composite prism (6) is composed of a first right-angle prism (601) and a third right-angle prism, a reflection and transmission face (605) and a beam-splitting face A (604) are provided on the the composite prism (6), and a roof prism reflection and transmission face (701) and a roof prism reflection face (702) are provided on an inner side of the roof prism;
a detector B (15) is provided in parallel with and above the reflection and transmission face (605) of the third right-angle prism (606), the observation focal plane on the outside of the first right-angle prism is provided with a transmission-type display device (12);
in one of two optical paths of two barrels of the binocular telescope, an emission device (22) is mounted in a position equivalent to that of the detector B (15);
the beam splitting surface A is formed by coating a beam splitting film on the hypotenuse face of the first right-angle prism (601).

5. The binocular telescope with digital display and laser ranging functions according to claim 3, **characterized in that**, the requirements for the coating of the beam splitting surface A include the following:
under the condition that a wavelength is 400~635±15nm, Tave≥98%, Tmin≥96%, T550≥99%,; under the condition that the wavelength is 670~720±20nm, Tave≥90%, Tave is the average transmittance, Tmin is the minimum transmittance, T550 is the transmittance when the wavelength is 550nm;
full-surface coating on the hypotenuse face of the first right-angle prism (601).

6. The binocular telescope with digital display and laser ranging functions according to claim 2, **characterized in that**, under the condition that the composite prism (6) is composed of an isosceles prism (602), a first right-angle prism (601) and a second right-angle prism (603), the binocular telescope further comprises a projection display assembly, wherein the projection display assembly comprises a display (13), an imaging lens A (16), a plane mirror (17) and an imaging lens B (18), wherein the display (13) is provided above a reflection and transmission face (605) of a roof prism (7), an image of the display (13) is reflected by the reflection and transmission face (605) of the provided roof prism (7) to the imaging lens A (16) along an incident optical axis (21), is reflected by the plane mirror (17), and then passes through the imaging lens B (18) so as to be projected to a beam-splitting face B (607) for reflection; and a detector A (14) is provided in parallel with and above the reflection and transmission face (605) of the isosceles prism (602), an observation focal plane A is provided on an outer side of the first right-angle prism (601), in the detector A (14), an image is formed through an exit optical axis A (19), in the observation focal plane A, an image is formed through an exit optical axis B (20), and the two intersect on a beam-splitting face A (604);
wherein the beam-splitting face A (604) and the beam-splitting face B (607) are formed by coating a beam splitting film on the hypotenuse faces of the first right-angle prism (601) and the second right-angle prism (603) respectively, and in one of two optical paths of two barrels of the binocular telescope, an emission device (22) is mounted in a position equivalent to that of the detector A (14).

7. The binocular telescope with digital display and laser ranging functions according to claim 6, **characterized in that**, the requirements for the coating of the beam splitting surface A and the beam splitting surface B include the following:
under the condition that a wavelength is 400~635±15nm, Tave≥98%, Tmin≥96%, T550≥99%,; under the condition that the wavelength is 670~720±20nm, Tave≥90%, Tave is the average transmittance, Tmin is the minimum transmittance, T550 is the transmittance when the wavelength is 550nm;
full-surface coating on the hypotenuse face of the first right-angle prism (601) and the second right-angle prism (603).

8. A lens coating method for the binocular telescope with digital display and laser ranging functions of claim 1, **characterized by** comprising:
step 1: cleaning treatment: firstly, cleaning the glass sheet (2), that is, soaking it in clean water for 5 to 10 minutes, taking it out, and then rinsing it in a water pipe for 3 to 5 minutes;
step 2: drying treatment: performing drying after cleaning, that is, dehydrating the cleaned glass sheet (2) with isopropanol, drying the dehydrated substrate through slow pulling with isopropanol, and then placing it in a dust-free coating constant-temperature oven to bake it at 60°C to 75°C for 5 hours;
step 3: hardening treatment: immersing the glass sheet (2) in a methyl silicone resin strengthening solution, with a hardening treatment temperature of 115°C to 125°C; and after 2 hours, taking out the glass sheet (2) and sending it to a drying oven for drying and curing, with a drying temperature of 120°C, and a curing time of 60 minutes;
step 4: annealing treatment: performing annealing on the hardened glass sheet (2);
step 5: secondary cleaning: placing the annealed glass sheet (2) in a vacuum coating chamber, and performing ion bombardment on a lens substrate with a Hall ion source for 3 to 5 minutes; and
step 6: coating with waterproof film layers: keeping a vacuum degree in the vacuum coating chamber greater than or equal to 5.0×10⁻³ Pa, simultaneously keeping a temperature in the vacuum coating chamber at 50°C to 70°C, and bombarding beeswax with the Hall ion source, wherein after the beeswax is evaporated, it is deposited on outer surfaces on both sides of the glass sheet (2) in the form of nano-scale molecules, with thicknesses of 60 nm to 100 nm, and finally colourless waterproof film layers of beeswax are formed.

## Patentansprüche

1. Ein Fernglas mit digitaler Anzeige und Laserentfernungsfunktion, umfassend:
einen Fernglaskörper (1) mit einer Einstellwelle (101) zur Einstellung des Winkels des Fernglaskörpers (1), wobei die Einstellwelle (101) mittig im Fernglaskörper (1) angeordnet ist;
eine Glasscheibe (2) zum Abschirmen und Schützen der inneren Komponenten des Fernglaskörpers (1); und
eine Begrenzungsplatte (3) zum Begrenzen und Fixieren der Glasscheibe (2);
**dadurch gekennzeichnet, dass** auf der Innenseite des Fernglaskörpers (1) eine Montagennut (102) und ein Begrenzungsblock (103) vorgesehen sind, wobei die Montagennut (102) und der Begrenzungsblock (103) fest mit der Innenseite des Fernglaskörpers (1) verbunden sind, und die Montagennut (102) sich an der Außenseite des Begrenzungsblocks (103) befindet; und
die Außenseite der Begrenzungsplatte (3) mit einem Gewinde (302) versehen ist, das Gewinde (302) mit der Montagennut (102) übereinstimmt, wobei die Begrenzungsplatte (3) mit dem Gewinde (302) in die Montagennut (102) eingeschraubt und fixiert ist, und die Begrenzungsplatte (3) an beiden Enden symmetrisch mit Stellblöcken (301) fest verbunden ist,
wobei die Innenseite der Begrenzungsplatte (3) ausgehöhlt ist.

2. Das Fernglas mit digitaler Anzeige und Laserentfernungsfunktion gemäß Anspruch 1, **dadurch gekennzeichnet, dass** im Inneren des Fernglaskörpers (1) eine Objektivbaugruppe, ein Strahlteiler- und Bildkombinationsprismensystem sowie eine Okularbaugruppe vorgesehen sind, wobei das Strahlteiler- und Bildkombinationsprismensystem zwischen der Objektivbaugruppe und der Okularbaugruppe angeordnet ist, oder das zusammengesetzte Prisma (6) aus einem ersten rechtwinkligen Prisma (601) und einem dritten rechtwinkligen Prisma (606) besteht;
wobei eine rechtwinklige Fläche des dritten rechtwinkligen Prismas (606) länger ist als die Hypotenusenfläche des ersten rechtwinkligen Prismas (601), und die rechtwinklige Fläche an die Hypotenusenfläche des ersten rechtwinkligen Prismas (601) angrenzt.

3. Das Fernglas mit digitaler Anzeige und Laserentfernungsfunktion gemäß Anspruch 2, **dadurch gekennzeichnet, dass** die Objektivbaugruppe ein drittes Linsenelement (8), ein viertes Linsenelement (9) und ein fünftes Linsenelement (10) umfasst, wobei das dritte Linsenelement (8), das vierte Linsenelement (9) und das fünfte Linsenelement (10) alle in der gleichen Achsrichtung angeordnet sind, und die Okularbaugruppe ein erstes Linsenelement (4) und ein zweites Linsenelement (5) umfasst, wobei das erste Linsenelement (4) und das zweite Linsenelement (5) ebenfalls in der gleichen Achsrichtung angeordnet sind, ein sechstes Linsenelement (51) und ein siebtes Linsenelement (52) zwischen dem ersten Linsenelement (4) und dem zweiten Linsenelement (5) angeordnet sind, und ein achtes Linsenelement (53) zwischen dem zweiten Linsenelement (5) und dem zusammengesetzten Prisma (6) angeordnet ist.

4. Das Fernglas mit digitaler Anzeige und Laserentfernungsfunktion gemäß Anspruch 2, **dadurch gekennzeichnet, dass**, wenn das zusammengesetzte Prisma (6) aus einem ersten rechtwinkligen Prisma (601) und einem dritten rechtwinkligen Prisma besteht, eine Reflexions- und Transmissionsfläche (605) und eine Strahlteilerfläche A (604) auf dem zusammengesetzten Prisma (6) vorgesehen sind, und eine Dachprisma-Reflexions- und Transmissionsfläche (701) sowie eine Dachprisma-Reflexionsfläche (702) auf der Innenseite des Dachprismas vorgesehen sind;
ein Detektor B (15) parallel und oberhalb der Reflexions- und Transmissionsfläche (605) des dritten rechtwinkligen Prismas (606) angeordnet ist, wobei auf der Außenseite des ersten rechtwinkligen Prismas (601) eine Transmissionsanzeigevorrichtung (12) auf der Beobachtungsbildebene angeordnet ist;
in einem der beiden optischen Wege der beiden Rohre des Fernglases ein Emissionsgerät (22) an einer Position montiert ist, die der des Detektors B (15) entspricht;
die Strahlteilerfläche A wird durch Beschichtung einer Strahlteilerfolie auf der Hypotenusenfläche des ersten rechtwinkligen Prismas (601) gebildet.

5. Das Fernglas mit digitaler Anzeige und Laserentfernungsfunktion gemäß Anspruch 3, **dadurch gekennzeichnet, dass** die Anforderungen an die Beschichtung der Strahlteilerfläche A folgende sind:
bei einer Wellenlänge von 400635±15nm, Tave≥98%, Tmin≥96%, T550≥99%, bei einer Wellenlänge von 670720 ± 20nm, Tave ≥ 90%, wobei Tave der durchschnittliche Transmissionswert, Tmin der minimale Transmissionswert und T550 der Transmissionswert bei einer Wellenlänge von 550nm ist;
vollflächige Beschichtung der Hypotenusenfläche des ersten rechtwinkligen Prismas (601).

6. Das Fernglas mit digitaler Anzeige und Laserentfernungsfunktion gemäß Anspruch 2, **dadurch gekennzeichnet, dass** das zusammengesetzte Prisma (6) aus einem gleichschenkligen Prisma (602), einem ersten rechtwinkligen Prisma (601) und einem zweiten rechtwinkligen Prisma (603) besteht, und das Fernglas eine Projektionsanzeigevorrichtung umfasst, wobei die Projektionsanzeigevorrichtung ein Display (13), eine Abbildungslinse A (16), einen Planspiegel (17) und eine Abbildungslinse B (18) umfasst, wobei das Display (13) oberhalb einer Reflexions- und Transmissionsfläche (605) eines Dachprismas (7) angeordnet ist, das Bild des Displays (13) durch die Reflexions- und Transmissionsfläche (605) des Dachprismas (7) zur Abbildungslinse A (16) entlang einer einfallenden optischen Achse (21) reflektiert wird, durch den Planspiegel (17) reflektiert wird und dann durch die Abbildungslinse B (18) projiziert wird, um auf eine Strahlteilerfläche B (607) reflektiert zu werden; ein Detektor A (14) ist parallel und oberhalb der Reflexions- und Transmissionsfläche (605) des gleichschenkligen Prismas (602) angeordnet, auf der Außenseite des ersten rechtwinkligen Prismas (601) ist eine Beobachtungsbildebene A angeordnet, im Detektor A (14) wird ein Bild durch eine Ausgangsoptikachse A (19) gebildet, und auf der Beobachtungsbildebene A wird ein Bild durch eine Ausgangsoptikachse B (20) gebildet, und die beiden Achsen kreuzen sich auf der Strahlteilerfläche A (604);
wobei die Strahlteilerfläche A (604) und die Strahlteilerfläche B (607) durch Beschichtung einer Strahlteilerfolie auf den Hypotenusenflächen des ersten rechtwinkligen Prismas (601) und des zweiten rechtwinkligen Prismas (603) gebildet werden, und in einem der beiden optischen Wege der beiden Rohre des Fernglases ein Emissionsgerät (22) an einer Position montiert ist, die der des Detektors A (14) entspricht.

7. Das Fernglas mit digitaler Anzeige und Laserentfernungsfunktion gemäß Anspruch 6, **dadurch gekennzeichnet, dass** die Anforderungen an die Beschichtung der Strahlteilerfläche A und der Strahlteilerfläche B folgende sind:
bei einer Wellenlänge von 400635±15nm, Tave≥98%, Tmin≥96%, T550≥99%, bei einer Wellenlänge von 670720 ± 20nm, Tave ≥ 90%, wobei Tave der durchschnittliche Transmissionswert, Tmin der minimale Transmissionswert und T550 der Transmissionswert bei einer Wellenlänge von 550nm ist;
vollflächige Beschichtung der Hypotenusenfläche des ersten rechtwinkligen Prismas (601) und des zweiten rechtwinkligen Prismas (603).

8. Ein Verfahren zur Beschichtung von Linsen des Fernglases mit digitaler Anzeige und Laserentfernungsfunktion gemäß Anspruch 1, **dadurch gekennzeichnet, dass** es umfasst:
Schritt 1: Reinigungsbehandlung: Zunächst wird die Glasscheibe (2) gereinigt, indem sie fü r 5 bis 10 Minuten in sauberes Wasser getaucht, anschließend herausgenommen und dann für 3 bis 5 Minuten in einer Wasserleitung gespült wird;
Schritt 2: Trocknungsbehandlung: Nach der Reinigung wird die Glasscheibe (2) mit Isopropanol entwässert, das entwässerte Substrat wird durch langsames Ziehen mit Isopropanol getrocknet, und dann wird es in einen staubfreien, temperaturkonstanten Beschichtungsofen bei 60° C bis 75° C für 5 Stunden zum Backen gelegt;
Schritt 3: Härtungsbehandlung: Die Glasscheibe (2) wird in eine Lösung aus Methylsilikonharz zur Härtung getaucht, wobei die Härtungstemperatur bei 115° C bis 125° C liegt; nach 2 Stunden wird die Glasscheibe (2) herausgenommen und in einen Trocknungsofen zur Trocknung und Aushärtung bei einer Temperatur von 120° C für eine Aushärtezeit von 60 Minuten gelegt;
Schritt 4: Temperbehandlung: Die gehärtete Glasscheibe (2) wird einem Tempervorgang unterzogen;
Schritt 5: Zweitreinigung: Die temperierte Glasscheibe (2) wird in eine Vakuumbeschichtungskammer gestellt, und das Linsensubstrat wird für 3 bis 5 Minuten mit einer Hall-Ionenquelle bombardiert;
Schritt 6: Beschichtung mit wasserfesten Filmen: Der Vakuumdruck in der Vakuumbeschichtungskammer wird bei einem Wert von ≥5.0× 10-3 Pa gehalten, während die Temperatur in der Vakuumbeschichtungskammer bei 50 ° C bis 70 ° C bleibt, wobei Bienenwachs mit der Hall-Ionenquelle bombardiert wird, und nach der Verdampfung des Bienenwachses es in Form von Molekülen im Nanomaßstab auf den äußeren Oberflächen beider Seiten der Glasscheibe (2) abgeschieden wird, mit einer Dicke von 60 nm bis 100 nm, wodurch schließlich farblose, wasserfeste Filmbeschichtungen aus Bienenwachs entstehen.

## Revendications

1. Un Télescope binoculaire avec affichage numérique et fonctions de télémétrie laser, comprenant :
un corps de télescope binoculaire (1), avec un arbre de réglage (101) pour régler un angle du corps de télescope binoculaire (1) étant fourni au milieu du corps de télescope binoculaire (1) ;
une feuille de verre (2) pour protéger les composants internes du corps de télescope binoculaire (1) ; et
une plaque de limitation (3) pour limiter et fixer la feuille de verre (2) ;
**caractérisé en ce qu'**une rainure de montage (102) et un bloc de limitation (103) sont prévus sur un côté intérieur du corps de télescope binoculaire (1), la rainure de montage (102) et le bloc de limitation (103) sont tous deux reliés de manière fixe au côté intérieur du corps de télescope binoculaire (1), et la rainure de montage (102) est prévue sur un côté extérieur du bloc de limitation (103) ; et
un côté extérieur de la plaque de limitation (3) est pourvu d'un filetage (302), le filetage (302) est fourni de concert avec la rainure de montage (102), la plaque de limitation (3) est filetée et reliée de manière fixe à un côté intérieur de la rainure de montage (102) avec le filetage (302), et des blocs de cadran (301) sont symétriquement et fixement reliés à deux extrémités sur le côté extérieur de la plaque de limitation (3),
la face interne de la plaque de limitation (3) est évidée.

2. Le télescope binoculaire avec affichage numérique et fonctions de télémétrie laser selon la revendication 1, **caractérisé en ce qu'**un ensemble objectif, un système de prisme de division de faisceau et de combinaison d'image et un ensemble oculaire sont fournis sur le côté intérieur du corps de télescope binoculaire (1), le système de prisme de division de faisceau et de combinaison d'image est fourni entre l'ensemble objectif et l'ensemble oculaire, ou le prisme composite (6) est composé d'un premier prisme à angle droit (601) et d'un troisième prisme à angle droit (606) ; dans lequel une face à angle droit du troisième prisme à angle droit (606) est plus longue qu'une face d'hypoténuse du premier prisme à angle droit (601), et la face à angle droit vient en butée sur la face d'hypoténuse du premier prisme à angle droit (601).

3. Le télescope binoculaire avec affichage numérique et fonctions de télémétrie laser selon la revendication 2, **caractérisé en ce qu'**un ensemble objectif comprend une troisième lentille (8), une quatrième lentille (9) et une cinquième lentille (10), dans lequel la troisième lentille (8), la quatrième lentille (9) et la cinquième lentille (10) sont toutes fournies dans une même direction axiale, et un ensemble oculaire comprend une première lentille (4) et une deuxième lentille (5), dans lequel la première lentille (4) et la seconde lentille (5) sont toutes deux disposées dans la même direction axiale, une sixième lentille (51) et une septième lentille (52) sont disposées entre la première lentille (4) et la seconde lentille (5), une huitième lentille (53) est disposée entre la seconde lentille (5) et le prisme composite (6).

4. Le télescope binoculaire avec affichage numérique et fonctions de télémétrie laser selon la revendication 2, **caractérisé en ce que**, à condition que le prisme composite (6) soit composé d'un premier prisme à angle droit (601) et d'un troisième prisme à angle droit, une face de réflexion et de transmission (605) et une face de division de faisceau A (604) sont prévues sur le prisme composite (6), et une face de réflexion et de transmission de prisme de toit (701) et une face de réflexion de prisme de toit (702) sont prévues sur un côté intérieur du prisme de toit ;
un détecteur B (15) est prévu parallèlement et au-dessus de la face de réflexion et de transmission (605) du troisième prisme à angle droit (606), le plan focal d'observation à l'extérieur du premier prisme à angle droit est pourvu d'un dispositif d'affichage du type à transmission (12) ;
dans l'un des deux chemins optiques de deux canons du télescope binoculaire, un dispositif d'émission (22) est monté dans une position équivalente à celle du détecteur B (15) ;
la surface de division du faisceau A est formée par le revêtement d'un film de division du faisceau sur la face de l'hypoténuse du premier prisme à angle droit (601).

5. Le télescope binoculaire avec affichage numérique et fonctions de télémétrie laser selon la revendication 3, **caractérisé par le fait que** les exigences pour le revêtement de la surface de division du faisceau A sont les suivantes :
si la longueur d'onde est de 400~635±15nm, Tave≥98%, Tmin≥96%, T550≥99% ; si la longueur d'onde est de 670~720±20nm, Tave≥90%, Tave est la transmittance moyenne, Tmin est la transmittance minimale, T550 est la transmittance lorsque la longueur d'onde est de 550nm ;
revêtement sur toute la surface de la face de l'hypoténuse du premier prisme à angle droit (601).

6. Le télescope binoculaire avec affichage numérique et fonctions de télémétrie laser selon la revendication 2, **caractérisé en ce que**, à la condition que le prisme composite (6) soit composé d'un prisme isocèle (602), d'un premier prisme à angle droit (601) et d'un second prisme à angle droit (603), le télescope binoculaire comprend en outre un ensemble d'affichage par projection, dans lequel l'ensemble d'affichage par projection comprend un écran (13), une lentille d'imagerie A (16), un miroir plan (17) et une lentille d'imagerie B (18), dans lequel l'écran (13) est placé au-dessus d'une face de réflexion et de transmission (605) d'un prisme de toit (7), une image de l'écran (13) est réfléchie par la face de réflexion et de transmission (605) du prisme de toit (7) vers la lentille d'imagerie A (16) le long d'un axe optique incident (21), est réfléchie par le miroir plan (17), puis passe à travers la lentille d'imagerie B (18) de manière à être projetée vers une face de division de faisceau B (607) pour la réflexion ; et un détecteur A (14) est prévu parallèlement et au-dessus de la face de réflexion et de transmission (605) du prisme isocèle (602), un plan focal d'observation A est prévu sur un côté extérieur du premier prisme à angle droit (601), dans le détecteur A (14), une image est formée à travers un axe optique de sortie A (19), dans le plan focal d'observation A, une image est formée à travers un axe optique de sortie B (20), et les deux se croisent sur une face de séparation des faisceau A (604) ;
la face de séparation des faisceau A (604) et la face de séparation des faisceaux B (607) sont formées par le revêtement d'un film de séparation des faisceaux sur les faces de l'hypoténuse du premier prisme à angle droit (601) et du second prisme à angle droit (603) respectivement, et dans l'un des deux chemins optiques des deux barillets du télescope binoculaire, un dispositif d'émission (22) est monté dans une position équivalente à celle du détecteur A (14).

7. Le télescope binoculaire avec affichage numérique et fonctions de télémétrie laser selon la revendication 6, **caractérisé par le fait que** les exigences pour le revêtement de la surface de division du faisceau A et la surface de division du faisceau B sont les suivantes :
si la longueur d'onde est de 400~635±15nm, Tave≥98%, Tmin≥96%, T550≥99% ; si la longueur d'onde est de 670~720±20nm, Tave≥90%, Tave est la transmittance moyenne, Tmin est la transmittance minimale, T550 est la transmittance lorsque la longueur d'onde est de 550nm ;
revêtement sur toute la surface de la face de l'hypoténuse du premier prisme à angle droit (601) et du second prisme à angle droit (603).

8. Procédé de revêtement de lentilles pour le télescope binoculaire avec affichage numérique et fonctions de télémétrie laser de la revendication 1, **caractérisé par le fait qu'**il comprend :
étape 1 : traitement de nettoyage : nettoyer tout d'abord la feuille de verre (2), c'est-à-dire la tremper dans de l'eau propre pendant 5 à 10 minutes, la retirer, puis la rincer dans une conduite d'eau pendant 3 à 5 minutes ;
étape 2 : traitement de séchage : effectuer le séchage après le nettoyage, c'est-à-dire déshydrater la feuille de verre (2) nettoyée avec de l'isopropanol, sécher le substrat déshydraté en le tirant lentement avec de l'isopropanol, puis le placer dans un four à revêtement dépoussiéré et à température constante pour le cuire à une température de 60°C à 75°C pendant 5 heures ;
étape 3 : traitement de durcissement : immersion de la feuille de verre (2) dans une solution de renforcement à base de résine de méthyl-silicone, à une température de durcissement de 115°C à 125°C ; après 2 heures, retirer la feuille de verre (2) et l'envoyer dans une étuve pour séchage et durcissement, à une température de séchage de 120°C et à une durée de durcissement de 60 minutes ;
étape 4 : traitement de recuit : recuit de la feuille de verre durcie (2) ;
étape 5 : nettoyage secondaire : placer la feuille de verre recuite (2) dans une chambre de revêtement sous vide et procéder à un bombardement ionique sur un substrat de lentille à l'aide d'une source d'ions Hall pendant 3 à 5 minutes ; et
étape 6 : revêtement avec des couches de film imperméable : maintien d'un degré de vide dans la chambre de revêtement sous vide supérieur ou égal à 5,0×10-3 Pa, maintien simultané d'une température dans la chambre de revêtement sous vide comprise entre 50 °C et 70 °C, et bombardement de cire d'abeille avec la source d'ions Hall, la cire d'abeille étant évaporée et déposée sur les surfaces extérieures des deux côtés de la feuille de verre (2) sous forme de molécules à l'échelle nanométrique, d'une épaisseur comprise entre 60 nm et 100 nm, et enfin formation de couches de film imperméable incolore en cire d'abeille.
